# EUROPEAN PATENT SPECIFICATION

(11) **EP 2 424 290 B1**
(45) Date of publication and mention of the grant of the patent: **25.02.2015**
(21) Application number: 10290453.9
(22) Date of filing: 24.08.2010
(51) Int. Cl.: H04W 24/02

(54) **Grouping of subset of cells of a wirelless telecommunication network**
Gruppierung eines Untersatzes von Zellen eines drahtlosen Kommunikationsnetzwerks
Groupage d'un sous-ensemble de cellules dans un réseau de télécommunication sans fil

(43) Date of publication of application: 29.02.2012
(73) Proprietor: ALCATEL LUCENT, 92100 Boulogne-Billancourt (FR)
(72) Inventor: Wajda, Wieslawa, 75210 Keltern (DE); Doetsch, Uwe, 74392 Freudental (DE); Ambrosy, Anton, 75233 Tiefenbronn (DE)
(74) Representative: Wetzel, Emmanuelle

(56) References cited:
- US-A1- 2003 143 999
- US-A1- 2007 066 329
- NEC: "Self optimisation Scenarios", 3GPP DRAFT; R3-061530, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Seoul, Korea; 20061005, 5 October 2006 (2006-10-05), XP050160415, [retrieved on 2006-10-05]
- ERICSSON: "Intra-LTE mobility in active mode", 3GPP DRAFT; R3-060718, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Shanghai, China; 20060503, 3 May 2006 (2006-05-03), XP050159627, [retrieved on 2006-05-03]

## Description

### Field of the invention

The invention relates to the field of wireless telecommunication, more specifically to grouping a subset of cells of a wireless telecommunication network.

### Background and related art

Grouping a subset of cells of a wireless telecommunication network to a cell cluster is performed by assigning a tracking area number to the cell cluster. A tracking area number serves for paging a mobile device. The mobile device has a tracking area list. The tracking area list indicates which tracking areas are paged when paging of the mobile device is necessary. Paging of the mobile device is necessary for example when a phone call has to be established with the mobile device or data has to be transmitted to the mobile device.

In "Self optimisation Scenarios" (3GPP Draft; R3-061530; 2006-10-05) by NEC the possible key areas are identified to which self optimisations could be applied for a LTE network and their possible impact on the E-UTRAN interfaces.

US 2007/006329 A1 describes a multi-mode base station that includes a transmit standby mode and an active mode. Transmit standby mode of base station operation is a low power/low interference level of operation as compared to active mode. In transmit standby mode at least some of the synchronization signaling such as pilot tone signaling is reduced in power level and/or rate with respect to the active mode. In transmit standby mode, the base station has no active state registered wireless terminals being serviced but may have some sleep state registered wireless terminals being serviced. Mode transitions from active to transmit standby may be in response to: a detected period of inactivity, scheduling information, base station mode change signals, and/or detected wireless terminal state transition. Mode transitions from transmit standby to active may be in response to: scheduling information, access signals, wake-up signals, hand-off signals, wireless terminal state change signals, and/or base station mode change.

US 2003/0143999 A1 describes paging areas in a telecommunication system that may be automatically reconfigured as required. Paging areas can be adaptively reconfigured in accordance with changes in movement traffic of mobile hosts. The system and method work under a constraint that only a limited number of area IDs are permitted for each paging unit area. Also, the system and method work over heterogeneous access networks. Thus, according to the presently disclosed embodiments, paging areas reconfigure themselves according to changes in movement traffic of mobile hosts.

In "Intra-LTE mobility in active mode" (3GPP Draft: R3-060718; 2006-05-03) by Ericsson the consequences of a UPE / MME split are identified and updates to the active mode mobility and idle to active signaling procedures are proposed.

### Summary

It is an object of the invention to provide an improved method of grouping a subset of cells, an improved central network entity, an improved computer readable storage medium, and an improved wireless communication system.

These objects are achieved by a method, a central network entity, a computer readable storage medium, and a wireless communication system according to the independent claims. Embodiments of the invention are given in the dependent claims.

The invention relates to a method of grouping a subset of cells of a wireless telecommunication network. Each cell is served by a corresponding base station. The method comprises monitoring the cells for identification of the subset of the cells being switched off and/or in a sleep mode. It is to be noted that the subset may also comprise only one cell. Preferably, the subset comprises a plurality of cells.

The subset of the cells is grouped to a cell cluster and each cell of the cell cluster is switched on and/or woken up, when a central network entity indicates paging of a mobile device being located in a cell of the cell cluster. The central network entity may for example be a mobility management entity or a central operation and maintenance entity. Paging of the mobile device is for example indicated when an incoming call is directed towards the mobile device, data is intended to be transmitted to the mobile device and/or a text message is intended to be transmitted to the mobile device. For transmitting data to the mobile device and/or routing a call to the mobile device and/or transmitting a text message to the mobile device, the concerned cell or cells of a base station has to be in operation mode. The concerned cell is the cell of the wireless telecommunication network, where the mobile device is located. The concerned cell is switched from sleep mode to operation mode by waking up the cell. In other words, waking up the cell consists of switching the cell from sleep mode to operation mode. Switching on a cell means switching a cell from a switched off mode to a switched on mode.

Switching off cells or switching cells into a sleep mode can be performed for energy saving reasons. A cell may be operated in operation mode or sleep mode. Sleep mode is used for energy saving reasons. In sleep mode, the periods of transmitting pilots and/or broadcast information may be modified for example. Broadcast information and/or pilots may be transmitted less regularly when a cell is switched from operation mode to sleep mode. A cell in sleep mode may also be a cell listening to signals of mobile devices in the cell but not transmitting any signals.

A cell in sleep mode could also be a cell transmitting a synchronization channel over the air interface. Additionally, pilots and/or broadcast information may be transmitted over the air interface. Preferably, pilots are transmitted not in every transmission time interval (TTI). For example, pilots may be transmitted only every n-th TTI, wherein n may for example be a number between 2 and 10.

It is to be noted that the backhaul connection to the core network as well as to neighboring base stations is not deactivated for a cell in sleep mode and for a switched-off cell.

A switched off cell does not transmit or receive any data, pilots and/or synchronization information as well as broadcast information on the air interface.

When referring to a switched-off cell or a cell in sleep mode, this may also be understood as the corresponding base station being switched off or in sleep mode. One base station may serve more than one cell. If a base station serves at least one cell being switched off and/or in sleep mode and at least one cell being switched on, the base station is partly switched off and/or in sleep mode. This means, that those parts of the base station are switched off or switched into sleep mode, which serve the corresponding switched off or sleeping cell.

A plurality of cells is monitored for identification of the subset of the cells being switched off and/or being switched in a sleep mode. This step may also be described by monitoring a plurality of cells of the wireless telecommunication network for identification of the subset of the cells being switched off and/or in a sleep mode. In other words, the plurality of cells is monitored for the subset of the cells being switched off and/or in a sleep mode. The subset of the cells is not predefined before monitoring the cells. Thus, the subset of the cells is defined at the moment when detecting that the subset of the cells is switched off and/or in a sleep mode. Again it is to be noted that the subset of the cells may also consist of only one cell.

Grouping the subset of the cells to a cell cluster is advantageous because when another cell not belonging to the cell cluster pages the mobile device, waking up and/or switching on the cells of the subset of the cells is not necessary. Dispensively waking up and/or switching on the cells of the cell cluster is avoided by switching on and/or waking up the cells of the cell cluster only when the central network entity indicates paging of the mobile device being located in the cell cluster. When the mobile device being paged is located outside the cell cluster no cell of the cell cluster is switched on and/or woken up.

According to embodiments of the invention the method further comprises the step of paging the mobile device after switching on and/or waking up the subset of the cells.

According to embodiments of the invention the method further comprises the step of assigning a tracking area number to the cell cluster. The tracking area number is solely assigned to the cell cluster. The tracking area number defines for the central network entity the tracking area, in which the respective mobile device is paged in case of paging is indicated. A tracking area list is used for defining the tracking area, where the mobile device is located. If the tracking area list for a certain mobile device for example comprises tracking area #1 then every cell belonging to tracking area #1 is paged when paging of the mobile device is indicated. The tracking area list may also comprise more than one tracking area number.

By assigning a tracking area number solely to the cell cluster, the cell cluster is defined as one tracking area. In the tracking area list of a mobile device being located in the cell cluster is the tracking area number of the cell cluster. Thus, every cell of the cell cluster is woken up and/or switched on when paging of the mobile device being located in the tracking area of the cell cluster is indicated. Assigning a tracking area number solely to the cell cluster is advantageous because the cells of the cell cluster are only woken up and/or switched on when a mobile device being located in a switched-off cell or a cell in sleep mode shall be paged. No sleeping or switched off cell is switched on or switched to operation mode when a mobile device not being located in the cell cluster is paged. Thus, energy is saved according to embodiments of the invention.

According to embodiments of the invention a cell being in said sleep mode provides downlink information in larger time intervals than a cell in operation mode. Downlink information may for example be synchronization information, broadcast information and/or pilots.

According to embodiments of the invention at least one timer of mobile devices being located in the cell cluster is adjusted to said larger time interval. In other words, the mobile devices being located in the cell cluster are adjusted to being in a cell in sleep mode or switched off. The time interval may for example be the time interval, when pilot symbols, synchronization information or broadcast information is transmitted by the cell. Because pilots and/or synchronization information as well as broadcast information are transmitted in larger time intervals, the mobile devices being located in the cell cluster also need to listen to the pilots and/or the synchronization information and broadcast information in larger time intervals. For example, the synchronization and broadcast channel may be switched on for a short time like 200-800ms and then be switched off for a longer time like 0.5-2 minutes. This also contributes to energy savings.

According to embodiments of the invention the at least one first cell of the cells of the cell cluster transmits a first signal to a second base station of a neighboring cell which does not belong to the cell cluster. The first signal is indicative of the at least one first cell being switched off or in sleep mode. A second signal is transmitted to the second base station. The second signal is indicative of the tracking area number. It is to be noted that the numbering of the signals mentioned in this disclosure does not indicate the time order, in which the signals are transmitted.

In other words, at least one first base station of the at least one first cell informs a second base station of the fact that the first base station is switched off or switched into sleep mode. Additionally the at least one first base station informs the second base station of the tracking area number of the cell cluster. Thus, the neighboring base station stores this tracking area number of the cell cluster in a data storage of the second base station. A neighboring cell herein may be understood as a cell having a common border with any cell of the cell cluster.

According to embodiments of the invention the second base station transmits a third signal to a mobile device after having received the first and the second signal. The third signal is indicative of the at least one first cell being switched off or in sleep mode. The third signal is indicative of the tracking area number. In other words, the information of the at least one first cell being switched off or being switched into sleep mode and the tracking area number is transmitted to the mobile device. The mobile device may for example be located in the cell of the second base station and be moved towards the cell cluster. In other words, the mobile device is moved away from the cell of the second base station towards the at least one first base station.

According to embodiments of the invention the second base station broadcasts a fourth signal. The fourth signal is indicative of said tracking area number. The tracking area number is broadcasted from the second base station with the fourth signal. Thus, every mobile device being located in the cell served by the second base station receives the tracking area number.

According to embodiments of the invention at least one mobile device receives the fourth signal. The at least one mobile device transmits a fifth signal to a central network entity. The fifth signal is indicative of the first cell being switched off or in sleep mode while the mobile device is approaching towards the first cell. Based on this information the mobile device initiates a tracking area update. Information about the first cell being switched off or in sleep mode is already stored in a data storage of the central network entity and a new list containing the solely tracking area of switched off cells is transmitted to the mobile device.

According to embodiments of the invention a tracking area list update is transmitted to the at least one mobile device after initiation of a tracking area update by the mobile device, when a signal quality and/or a signal power of signals being received by the mobile device from the second base station is below a signal quality threshold and/or a signal power threshold. The tracking list comprises the tracking area number. Additionally the tracking list may also comprise further tracking area numbers. The tracking area lists may for example be transmitted by the central node via the second base station to the mobile device. The tracking area list is transmitted to the at least one mobile device when the signal quality and/or the signal power falls below a corresponding threshold. The signal quality and/or the signal power falling under the respective threshold indicates that the at least one mobile device is likely to be moved away from the second base station. If no signals are received from another base station it is likely that the mobile device is moved towards the cell cluster. The tracking area list with the tracking area number of the cell cluster is then transmitted to the at least one mobile device because the at least one mobile device is most likely located in the cell cluster and when paging of the at least one mobile device is indicated the cells of the cell cluster need to be woken up and/or switched on.

If two cell clusters with different tracking area numbers are located neighboring to the cell of the second base station both tracking area numbers of both cell clusters are comprised by the tracking area list. This is advantageous when both neighboring cell clusters consist of sleeping or switched off cells. In this case, when paging of the at least one mobile device is indicated, both cell clusters are woken up and/or switched on.

Additionally or alternatively the movement of the at least one mobile device towards the cell cluster may also be indicated by location information being transmitted from the at least one mobile device to the second base station and/or to the central network entity. Location information may for example be satellite navigation system data. The location information defines the location of the at least one mobile device.

According to embodiments of the invention a network operator can manually edit the tracking area list being transmitted to the at least one mobile device.

According to embodiments of the invention a base station in operation mode transmits a sixth signal to a central node. The sixth signal being indicative of a cell of said base station being switched off or being switched into sleep mode. The sixth signal is further indicative of adding said cell to the cell cluster. Said cell is switched off or switched into sleep mode and added to the cell cluster. Furthermore the base station is informed by the central node that said cell belongs to the new tracking area. In other words, a cell may be added to the cell cluster. This means that the number of cells in the cell cluster is dynamically adjusted. For example, when a neighboring cell of the cell cluster is switched off or switched into sleep mode it is advantageous to add the cell to the cell cluster of sleeping and/or switched off cells. The tracking area number of the cell cluster is then also assigned to the added cell.

In another aspect the invention relates to a central network entity for a wireless telecommunication network. The central network entity may for example be a mobility management entity and/or an operation and maintenance centre. The central network entity comprises means for monitoring the cells for identification of a subset of the cells being switched off or being switched in a sleep mode. Monitoring may for example be performed by a processor executing program instructions being stored in a data storage.

The central network entity further comprises means for grouping the subset of the cells to a cell cluster. This may for example also be the processor. Further, the central network entity comprises means for switching on and/or waking up each cell of the cells of the cell cluster, when a central network entity indicates paging of a mobile device being located in a cell of the cell cluster. The means for switching may also be the processor.

In another aspect the invention relates to a computer readable storage medium. The computer readable storage medium comprises instructions that when executed by a central network entity cause the central network entity to perform a method of grouping cells of a wireless telecommunication network.

Cells of the wireless telecommunication network are monitored by the central network entity for identification of a subset of the cells being switched off or being switched into a sleep mode. Then grouping the subset of the cells to a cell cluster is performed and each cell of the cells of the cell cluster is switched on and/or woken up when the central network entity indicates paging of a mobile device being located in a cell of the cell cluster.

In yet another aspect the invention relates to a wireless communication system comprising at least one central network entity according to embodiments of the invention.

### Brief description of the drawings

In the following preferred embodiments of the invention will be described, by way of example only, and with reference to the drawings in which:
- Figure 1: is a schematic view of cells of a wireless telecommunication network comprising a cell cluster of switched off cells and/or cells in sleep mode;
- Figure 2: is a flow diagram of a method according to embodiments of the invention; and
- Figure 3: is a block diagram of a wireless telecommunication system comprising a central network entity and a plurality of base stations.

### Detailed description

Like numbered elements in these figures are either identical elements or perform the same function. Elements which have been discussed previously will not necessarily be discussed in later figures if the function is identical.

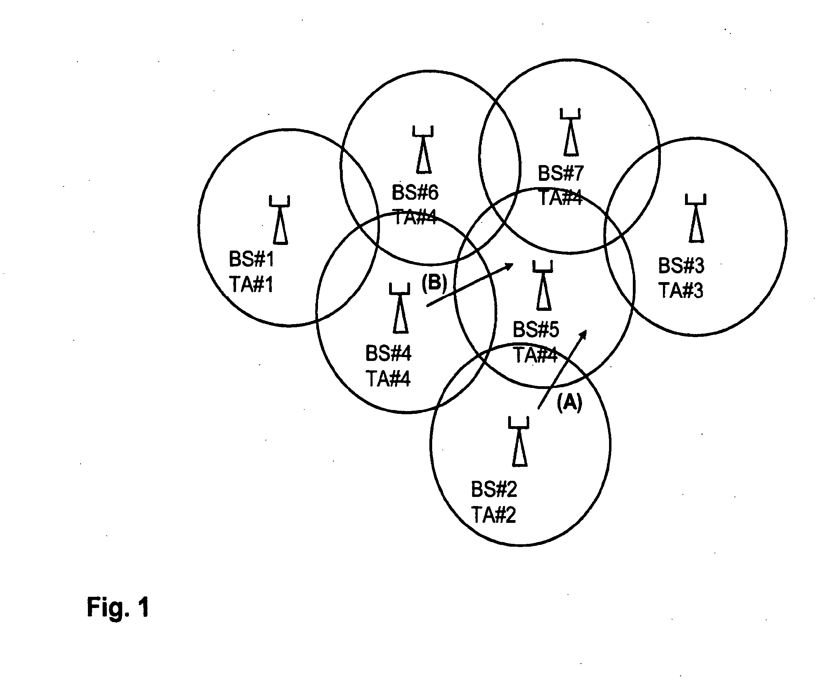

Figure 1 is a schematic view of a plurality of base stations each serving a single cell with uniform transmission of a wireless telecommunication network. In figure 1 are seven base stations and seven corresponding cells depicted. The base stations are enumerated BS#1 through BS#7. In figure 1 each base station only serves one corresponding cell. It is to be noted that one base station could also serve a plurality of cells. For simplicity reasons, when referring to a base station being switched off or in sleep mode corresponds to the fact that the respective cell is switched of or in sleep mode.

Base stations #1-3 are switched on. In other words, base stations #1-3 are in operation mode. Base stations #4-7 are in sleep mode and/or switched off. Base stations #4-7 belong to tracking area (TA) #4. Base stations #1-3 each belong to a corresponding tracking area #1-3. This means that base station #1 corresponds to tracking area #1, base station #2 corresponds to tracking area #2, and base station #3 corresponds to tracking area #3. Thus, the base stations #4 through #7 are comprised by a cell cluster. The cell cluster corresponds to tracking area #4.

When paging of a mobile phone in one of the tracking areas #1-3 is indicated, the corresponding base station pages the mobile device. Waking up and/or switching on a base station of the cell cluster is not necessary. When a mobile device is located inside tracking area #4 and paging of this mobile device is indicated, base stations #4 through #7 are woken up and/or switched on. Waking up a base station could also be referred to as switching a base station from sleep mode to operation mode. In sleep mode a cell saves energy. This may for example be performed by transmitting broadcast information less regularly than in operation mode and/or by transmitting pilots less regularly than in operation mode.

The tracking area, where the mobile device is located, is indicated in a tracking area list. The tracking area list may comprise only one tracking area or a plurality or tracking areas. The tracking area list of a mobile device being located in tracking area #4 comprises preferably only tracking area #4. The tracking area list of a mobile device being located in one of the tracking areas #1-3 preferably comprises only the corresponding tracking area. The tracking area list may also comprise more than one tracking area number. When paging of a mobile device is indicated, each base station of the tracking areas listed in the tracking area list pages the mobile device.

The tracking area list may also be updated. If a mobile device is moved outside of the tracking area(s) indicated in the tracking area list, the mobile device requests a tracking area update and an updated tracking area list is provided by the central network entity. The updated tracking area list may comprise at least partially tracking areas of the former tracking area list. Alternatively the updated tracking area does not comprise any tracking areas of the former tracking area list.

Figure 1 further shows two situations of a mobile device being moved inside the wireless telecommunication network. When a base station is switched-off or goes into sleep mode it informs all its neighbor base stations about this. Situation A is a mobile device being moved from base station #2 towards base station #5, which belongs to tracking area #4. In this case the neighbor base station #2 is informed by a signal, that its neighbor base stations BS#4 and BS#5 are switched-off or in sleep mode. The status of the switched-off neighbor base stations should be broadcasted over the air by base station #2 or base station #2 may send a signal to all mobile devices, which are located within the coverage area of base station#2. This new feature helps idle mobile devices to learn about the status of switched-off neighbor cells before they enter the coverage area of these cells. This could be performed by using a flag, which is included in the system information element, e.g. in combination with the broadcasted neighbor cell identifier. Then mobile devices store information about possible switched-off neighbor cells.

In addition the new assigned tracking area number #4, to which base station #4 and base station #5 belong, could also be provided by broadcasting this information by base station #2 within its coverage area. Then an idle mobile device, which moves into the coverage area of base station #5 is enabled to request a tracking area update from the central network entity. Furthermore, the central network entity will update the list of tracking are numbers for this mobile device. For example a further signal will be sent to the mobile device while the mobile device is located within tracking area #4, said signal being indicative of the tracking area number #4. The central network entity can be informed on the status that a cell is switched-off by the switched-off cell itself or by the idle mobile device, which requests a tracking area update for base station#5.

In situation (B) an idle mobile device is moved from base station#4, which belongs to tracking area #4, towards base station #5, which also belongs to tracking area #4. In this case the base station #4 is aware of the switched-off status of base station #5 and vice versa, because the exchange of this information is already specified in 3GPP TS 36.423. It is assumed, that the base station #4, which will be switched-off, sends broadcast or dedicated information, e.g. by the usage of a special paging request, to all idle mobile devices, which are located in the coverage area of base station #4, to inform said mobile devices that the base station #4 will be switched-off and belongs to a new tracking area #4. Then all mobile devices will execute a tracking area update and will receive from the central network entity an updated list of tracking area numbers, which comprises for this scenario solely tracking area number #4. Paging of these idle mobile devices can be performed within the tracking area #4. In addition a timer with a much longer period should be set for all idle mobile devices, which are located within such a tracking area, to increase also wake-up times for mobile devices, especially for any requests or listening periods.

The tracking area will not be changed, if an idle mobile device moves into the coverage area of base station #5. Therefore, a tracking area update is not required. The configuration with respect to the enlarged timer will be the same as in the coverage area of base station #4, i.e. the wake-up time of idle mobile devices is the same as long as these mobile devices are moving within the tracking area TA#4.

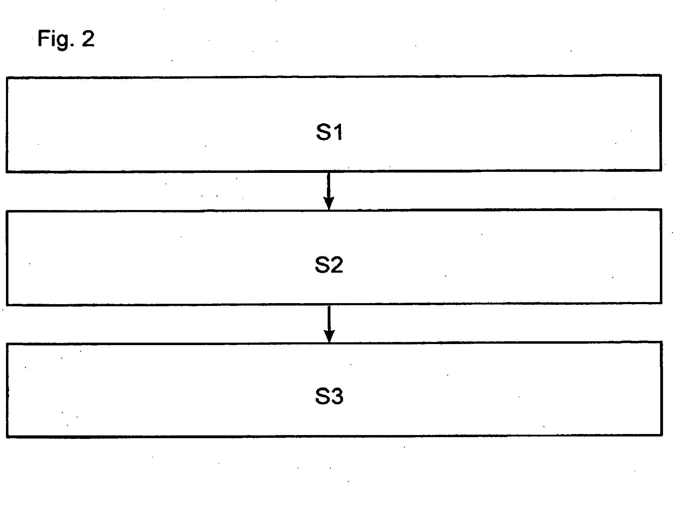

Figure 2 is a flow diagram of a method of grouping a subset of cells of a wireless telecommunication network. In step S1 the cells are monitored for identification of the subset of the cells being switched off and/or in a sleep mode. The sleep mode is in comparison to an operation mode the mode where the base station saves energy. The subset of cells is not predefined. A plurality of cells is monitored and when a subset of cells is identified as being switched off and/or in sleep mode this subset of the cells is grouped to a cell cluster in step S2.

In step S3 each base station of the cells of the cell cluster is switched on and/or woken up, when a central network entity such as a mobility management entity or an operation and maintenance center indicates paging of a mobile device being located in a cell of the cell cluster. In other words, each base station of the cluster is woken up when a mobile device in the cell cluster shall be paged. Paging is indicated by the central network entity when a call is directed towards the mobile device, a text message is directed to the mobile device and/or data shall be transmitted towards the mobile device.

Optionally a tracking area number may be assigned to the cell cluster. The tracking area number is solely assigned to the cell cluster. This is advantageous because a mobile device in the cell cluster has a tracking area list comprising only the tracking area number of the cell cluster. Thus, when paging of the mobile device is indicated by the central network entity each base station of the cell cluster is woken up and/or switched on. Waking up a base station could also be described as switching a base station from sleep mode to operation mode. It is advantageous to assign the tracking area number solely to the cell cluster because then the base stations of the cell cluster are only woken up and/or switched on when a mobile device inside the cell cluster shall be paged. No base station of the cell cluster is switched on and/or woken up when the mobile device to be paged is located in a cell of a base station being in operation mode. Thus, unnecessarily waking up and/or switching on a base station of the cell cluster is avoided.

Cells of base stations being switched off and/or being switched into sleep mode may be added to the cell cluster. In this case the same tracking area number of the cell cluster is also assigned to the added cell.

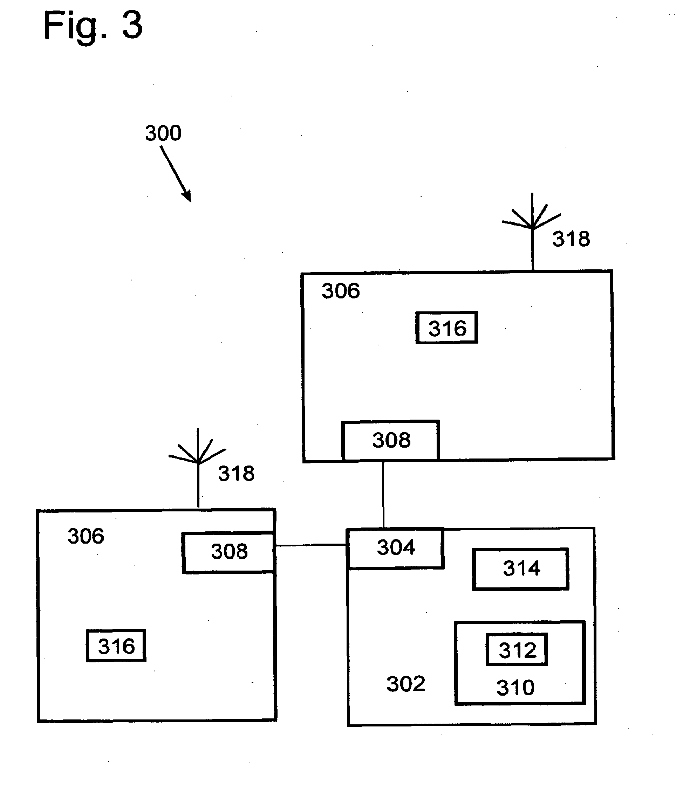

Figure 3 is a block diagram of a wireless communication system 300 with a central network entity 302 and a plurality of base stations 306. In figure 3 only two base stations 306 and one central network 302 entity are depicted for simplicity reasons. The wireless communication system 300 may also comprise more than one central network entity and more than two base stations.

The central network entity 302 comprises an interface 304 for communicating with base stations 306. The interface 304 may for example be an S1 interface. Base stations 306 comprise an interface 308 for transmitting and receiving data from central network entity 302. The interfaces 308 may also be an S1 interface. Central network entity 302 further comprises a data storage 310. Program instructions 312 are located in data storage 310. The program instructions 312 may be executed by processor 314 of central network entity 302. Base stations 306 comprise a processor 316. Base stations 306 further comprise antennas 318 for communicating with mobile devices (not depicted). The base stations 306 may be switched off, in sleep mode, or in operation mode. In operation mode data and signals are transmitted and received to and from at least one mobile device being located in a cell served by the corresponding base station 306. The processor 316 of each base station 306 is adapted for switching the base station 306 from operation mode to sleep mode and/or from operation mode to the switched off state and vice versa. A switched off base station 306 does not transmit and receive any signals via antenna 318. A base station 306 in sleep mode transmits signals like pilots and/or broadcast information less regularly than a base station 306 in operation mode. This contributes to energy savings. A base station 306 in sleep mode transmits a synchronization channel for synchronizing of mobile devices being located in the respective cell.

A base station 306 may serve more than one cell. In this case the base station 306 may be switched off or in sleep mode for less cells than the total number of served cells. If, for example, base station 306 serves six cells, all six cells may be switched off and/or into sleep mode or less than six cells may be switched off and/or into sleep mode.

The central network entity is adapted for monitoring the cells being served by base stations 306. This may for example be performed by the processor 314 executing program instructions 312. If at least one base station 306 is switched off or switched into sleep mode the processor 314 may detect that a subset of the cells of the wireless telecommunication network is switched off or in a sleep mode. The subset of the cells may be one single cell or a plurality of cells. The decision of grouping the subset of the cells to a cell cluster is also made by processor 314. Preferably the subset consists of cells being neighbored.

The processor 314 is further caused by program instruction 312 to switch on and/or wake up each base station 306 of the cell cluster. The base stations 306 are woken when the central network entity indicates paging of a mobile device being located in a cell of the cell cluster. Paging of mobile device may for example be indicated when a call must be routed to the mobile device and/or data shall be transmitted to the mobile device and/or a text message shall be transmitted to the mobile device.

### List of reference numerals

- BS #1-7: Base station identifier
- TA #1-4: Tracking area identifier
- 300: Wireless telecommunication network
- 302: Central network entity
- 304: Interface
- 306: Base station
- 308: Interface
- 310: Data storage
- 312: Program instructions
- 314: Processor
- 316: Processor
- 318: Antenna

## Claims

1. A method of grouping a sub-set of cells of a wireless telecommunication network (300), each cell being served by a corresponding base station (BS#1-7), wherein the method comprises:
- monitoring (S1) the cells for identification of the sub-set of the cells being switched off and/or in a sleep mode;
- grouping (S2) the sub-set of the cells to a cell cluster; and
- switching (S3) on and/or waking up each base station of the cells of the cell cluster, when a central network entity (302) indicates paging of a mobile device being located in a cell of the cell cluster.

2. Method according to claim 1, wherein the method further comprises the step of
- paging the mobile device after switching on and/or waking up each base station of the cells of the cell cluster.

3. Method according to any one of the preceding claims, wherein the method further comprises the step of
- assigning a tracking area number (TA) to the cell cluster, the tracking area number being solely assigned to the cell cluster, wherein the tracking area number is adapted for indicating to the central network entity that the mobile device is located in a cell of the cell cluster.

4. Method according to any one of the preceding claims, wherein a base station being in said sleep mode provides downlink information in bigger time intervals than a base station in operation mode.

5. Method according to claim 4, wherein at least one timer of mobile devices being located in the cell cluster is adjusted to said bigger time interval.

6. Method according to any one of the claims 3-5, wherein at least one first base station of the cells of the cell cluster transmits a first signal to a second base station of a neighboring cell of the cell cluster, the first signal being indicative of the at least one first base station being switched off or in sleep mode, and wherein a second signal is transmitted to the second base station, the second signal being indicative of the tracking area number.

7. Method according to claim 6, wherein the second base station transmits a third signal to a mobile device after having received the first and the second signal, the third signal being indicative of the at least one first base station being switched off or in sleep mode and the third signal being indicative of the tracking area number.

8. Method according to claim 7, wherein said mobile device is being moved away from the second base station towards the at least one first base station.

9. Method according to any one of the claims 6-8, wherein said second base station broadcasts a fourth signal, the fourth signal being indicative of said tracking area number.

10. Method according to claim 9, wherein at least one mobile device receives the fourth signal, and wherein the at least one mobile device transmits a fifth signal to a central network entity, the fifth signal being indicative of the first base station being switched off or in sleep mode.

11. Method according to claim 10, wherein a tracking area list is transmitted to the at least one mobile device, when a signal quality and/or a signal power of signals being received by the mobile device from the second base station is below a signal quality threshold and/or a signal power threshold, the tracking list comprising the tracking area number.

12. Method according to any one of the preceding claims, wherein the method further comprises the following steps:
- a base station in operation mode transmits a sixth signal, the sixth signal being indicative of said base station being switched off or being switched into sleep mode, the sixth signal being further indicative of adding said base station to the cell cluster;
- switching said base station off or switching said base station into sleep mode;and
- adding said base station to the cell cluster.

13. A central network entity (302) for a wireless telecommunication network, the central network entity comprising:
- means (314) for monitoring the cells for identification of a sub-set of the cells being switched off or in a sleep mode;
- means (314) for grouping the sub-set of the cells to a cell cluster; and
- means (314) for switching on and/or waking up each base station of the cells of the cell cluster, when the central network entity indicates paging of a mobile device being located in a cell of the cell cluster.

14. A computer-readable storage medium (310) the computer-readable storage medium comprising instructions (312) that when executed by a central network (302) entity cause the central network entity to perform a method of grouping cells of a wireless telecommunication network, the method comprising:
- monitoring (S1) cells of a mobile telecommunication network for identification of a sub-set of the cells being switched off or in a sleep mode;
- grouping (S2) the sub-set of the cells to a cell cluster; and
- switching (S3) on and/or waking up each base station of the cells of the cell cluster, when the central network entity indicates paging of a mobile device being located in a cell of the cell cluster.

15. A wireless communication system (300) comprising at least one central network entity according to claim 13.

## Patentansprüche

1. Verfahren zur Gruppierung eines Teilsatzes von Zellen eines drahtlosen Telekommunikationsnetzwerks (300), wobei jede Zelle von einer entsprechenden Basisstation (BS#1-7) versorgt wird, wobei das Verfahren umfasst:
- Überwachen (S1) der Zellen, um den Teilsatz der Zellen, welche ausgeschaltet sind und/oder sich im Schlafmodus befinden, zu identifizieren;
- Gruppieren (S2) des Teilsatzes der Zellen in einen Zellencluster; und
- Einschalten (S3) und/oder Aufwecken einer jeden Basisstation der Zellen des Zellenclusters, wenn eine zentrale Netzwerkentität (302) ein Anpagen eines Mobilgeräts, welches sich in einer Zelle des Zellenclusters aufhält, anzeigt.

2. Verfahren nach Anspruch 1, wobei das Verfahren weiterhin den folgenden Schritt umfasst:
- Anpagen des Mobilgeräts nach Einschalten und/oder Aufwecken einer jeden Basisstation der Zellen des Zellenclusters.

3. Verfahren nach einem beliebigen der vorstehenden Ansprüche, wobei das Verfahren weiterhin den folgenden Schritt umfasst:
- Zuordnen einer Tracking-Area-Nummer (TA) zu dem Zellencluster, wobei die Tracking-Area-Nummer ausschließlich dem Zellencluster zugeordnet wird, wobei die Tracking-Area-Nummer geeignet ist, um der zentralen Netzwerkentität anzuzeigen, dass sich das Mobilgerät in einer Zelle des Zellenclusters befindet.

4. Verfahren nach einem beliebigen der vorstehenden Ansprüche, wobei eine Basisstation, welche sich in dem besagten Schlafmodus befindet, Downlink-Informationen in größeren Zeitintervallen bereitstellt als eine Basisstation im Betriebsmodus.

5. Verfahren nach Anspruch 4, wobei zumindest ein Timer des Mobilgeräts, welches sich in dem Zellencluster befindet, an das besagte größere Zeitintervall angepasst wird.

6. Verfahren nach einem beliebigen der Ansprüche 3-5, wobei mindestens eine erste Basisstation der Zellen des Zellenclusters ein erstes Signal an eine zweite Basisstation einer benachbarten Zelle des Zellenclusters überträgt, wobei das erste Signal dafür indikativ ist, dass die mindestens eine erste Basisstation ausgeschaltet ist oder sich im Schlafmodus befindet, und wobei ein zweites Signal an die zweite Basisstation übertragen wird, wobei das zweite Signal für die Tracking-Area-Nummer indikativ ist.

7. Verfahren nach Anspruch 6, wobei die zweite Basisstation nach Empfangen des ersten und des zweiten Signals ein drittes Signal an ein Mobilgerät überträgt, wobei das dritte Signal dafür indikativ ist, dass die mindestens eine erste Basisstation ausgeschaltet ist oder sich im Schlafmodus befindet, und wobei das dritte Signal für die Tracking-Area-Nummer indikativ ist.

8. Verfahren nach Anspruch 7, wobei das besagte Mobilgerät von der zweiten Basisstation weg- und zu der mindestens einen ersten Basisstation hinbewegt wird.

9. Verfahren nach einem beliebigen der Ansprüche 6-8, wobei die besagte zweite Basisstation ein viertes Signal broadcastet, wobei das vierte Signal für die besagte Tracking-Area-Nummer indikativ ist.

10. Verfahren nach Anspruch 9, wobei mindestens ein Mobilgerät das vierte Signal empfängt, und wobei das mindestens eine Mobilgerät ein fünftes Signal an eine zentrale Netzwerkentität überträgt, wobei das fünfte Signal dafür indikativ ist, dass die erste Basisstation ausgeschaltet ist oder sich im Schlafmodus befindet.

11. Verfahren nach Anspruch 10, wobei eine Tracking-Area-Liste an das mindestens eine Mobilgerät übertragen wird, wenn eine Signalqualität und/oder eine Signalleistung von an dem Mobilgerät von der zweiten Basisstation empfangenen Signalen einen Signalqualitätsgrenzwert und/oder einen Signalleistungsgrenzwert unterschreitet, wobei die Tracking-Area-Liste die Tracking-Area-Nummer enthält.

12. Verfahren nach einem beliebigen der vorstehenden Ansprüche, wobei das Verfahren weiterhin die folgenden Schritte umfasst:
- Übertragen eines sechsten Signals durch eine sich im Betriebsmodus befindliche Basisstation, wobei das sechste Signal dafür indikativ ist, dass die besagte Basisstation ausgeschaltet oder in den Schlafmodus geschaltet ist, wobei das sechste Signal weiterhin dafür indikativ ist, dass die besagte Basisstation zu dem Zellencluster hinzugefügt wird;
- Ausschalten der besagten Basisstation oder Schalten der besagten Basisstation in den Schlafmodus; und
- Hinzufügen der besagten Basisstation zu dem Zellencluster,

13. Zentrale Netzwerkentität (302) für ein drahtloses Telekommunikationsnetzwerk, wobei die zentrale Netzwerkentität umfasst:
- Mittel (314) zum Überwachen der Zellen, um einen Teilsatz der Zellen, die ausgeschaltet sind oder sich im Schlafmodus befinden, zu identifizieren;
- Mittel (314) zum Gruppieren des Teilsatzes der Zellen in einen Zellencluster; und
- Mittel (314) zum Einschalten und/oder Aufwecken einer jeden Basisstation der Zellen des Zellenclusters, wenn eine zentrale Netzwerkentität ein Anpagen eines Mobilgeräts, welches sich in einer Zelle des Zellenclusters aufhält, anzeigt.

14. Computerlesbares Speichermittel (310), wobei das computerlesbare Speichermittel Befehle (312) umfasst, die, wenn sie auf einer zentralen Netzwerkentität (302) ausgeführt werden, bewirken, dass die zentrale Netzwerkentität ein Verfahren zur Gruppierung von Zellen eines drahtlosen Telekommunikationsnetzwerks durchführt, wobei das Verfahren umfasst:
- Überwachen (S1) der Zellen eines mobilen Telekommunikationsnetzwerks, um einen Teilsatz der Zellen, die ausgeschaltet sind oder sich in einem Schlafmodus befinden, zu identifizieren;
- Gruppieren (S2) des Teilsatzes der Zellen in einen Zellencluster; und
- Einschalten (S3) und/oder Aufwecken einer jeden Basisstation der Zellen des Zellenclusters, wenn eine zentrale Netzwerkentität ein Anpagen eines Mobilgeräts, welches sich in einer Zelle des Zellenclusters aufhält, anzeigt.

15. Drahtloses Kommunikationssystem (300), umfassend mindestens eine zentrale Netzwerkentität gemäß Anspruch 13.

## Revendications

1. Procédé de regroupement d'un sous-ensemble de cellules d'un réseau de télécommunication sans fil (300), chaque cellule étant desservie par une station de base correspondante (BS#1-7), le procédé comprenant les étapes suivantes :
- surveiller (S1) les cellules pour identifier que le sous-ensemble des cellules est désactivé et/ou en mode de veille ;
- regrouper (S2) le sous-ensemble des cellules en un groupement de cellules ; et
- activer (S3) et/ou réveiller chaque station de base des cellules du groupement de cellules, lorsqu'une entité de réseau central (302) indique la recherche d'un dispositif mobile situé dans une cellule du groupement de cellules.

2. Procédé selon la revendication 1, le procédé comprenant en outre l'étape suivante :
- rechercher le dispositif mobile après avoir activé et/ou réveiller chaque station de base des cellules du groupement de cellules.

3. Procédé selon l'une quelconque des revendications précédentes, le procédé comprenant en outre l'étape suivante :
- attribuer un numéro de zone de suivi (TA) au groupement de cellules, le numéro de zone de suivi étant attribué uniquement au groupement de cellules, le numéro de zone de suivi étant adapté pour indiquer à l'entité de réseau central que le dispositif mobile est situé dans une cellule du groupement de cellules.

4. Procédé selon l'une quelconque des revendications précédentes, dans lequel une station de base qui est dans ledit mode de veille fournit des informations de liaison descendante dans des intervalles de temps plus importants qu'une station de base en mode de fonctionnement.

5. Procédé selon la revendication 4, dans lequel au moins un temporisateur de dispositifs mobiles situés dans le groupement de cellules est réglé sur ledit intervalle de temps plus important.

6. Procédé selon l'une quelconque des revendications précédentes 3 à 5, dans lequel au moins une première station de base des cellules du groupement de cellules transmet un premier signal à une deuxième station de base d'une cellule voisine du groupement de cellules, le premier signal indiquant que l'au moins une première station de base est désactivée ou en mode de veille, et dans lequel un deuxième signal est transmis à la deuxième station de base, le deuxième signal indiquant le numéro de zone de suivi.

7. Procédé selon la revendication 6, dans lequel la deuxième station de base transmet un troisième signal à un dispositif mobile après avoir reçu le premier et le deuxième signaux, le troisième signal indiquant que l'au moins une première station de base est désactivée ou en mode de veille et le troisième signal indiquant le numéro de zone de suivi.

8. Procédé selon la revendication 7, dans lequel ledit dispositif mobile est éloigné de la deuxième station de base en direction de l'au moins une première station de base.

9. Procédé selon l'une quelconque des revendications 6 à 8, dans lequel ladite deuxième station de base diffuse un quatrième signal, le quatrième signal indiquant ledit numéro de zone de suivi.

10. Procédé selon la revendication 9, dans lequel au moins un dispositif mobile reçoit le quatrième signal, et dans lequel l'au moins un dispositif mobile transmet un cinquième signal à une entité de réseau central, le cinquième signal indiquant que la première station de base est désactivée ou en mode de veille.

11. Procédé selon la revendication 10, dans lequel une liste de zones de suivi est transmise à l'au moins un dispositif mobile, lorsqu'une qualité de signal et/ou une puissance de signal des signaux reçus par le dispositif mobile à partir de la deuxième station de base est inférieure à un seuil de qualité de signal et/ou à un seuil de puissance de signal, la liste de suivi comprenant le numéro de zone de suivi.

12. Procédé selon l'une quelconque des revendications précédentes, le procédé comprenant en outre les étapes suivantes :
- une station de base en mode de fonctionnement transmet un sixième signal, le sixième signal indiquant que ladite station de base est désactivée ou passe en mode de veille, le sixième signal indiquant en outre l'ajout de ladite station de base dans le groupement de cellules ;
- désactiver ladite station de base ou faire passer ladite station de base en mode de veille ; et
- ajouter ladite station de base dans le groupement de cellules.

13. Entité de réseau central (302) pour un réseau de télécommunication sans fil, l'entité de réseau central comprenant :
- des moyens (314) pour surveiller les cellules pour identifier qu'un sous-ensemble des cellules est désactivé ou en mode de veille ;
- des moyens (314) pour regrouper le sous-ensemble des cellules en un groupement de cellules ; et
- des moyens (314) pour activer et/ou réveiller chaque station de base des cellules du groupement de cellules, lorsque l'entité de réseau central indique la recherche d'un dispositif mobile situé dans une cellule du groupement de cellules.

14. Support de stockage lisible par ordinateur (310) le support de stockage lisible par ordinateur comprenant des instructions (312) qui, lorsqu'elles sont exécutées par une entité de réseau central (302) entraînent l'exécution par l'entité de réseau central d'un procédé de regroupement de cellules d'un réseau de télécommunication sans fil, le procédé comprenant les étapes suivantes :
- surveiller (S1) des cellules d'un réseau de télécommunication mobile pour identifier qu'un sous-ensembte des cellules est désactivé ou en mode de veille ;
- regrouper (S2) le sous-ensemble des cellules en un groupement de cellules ; et
- activer (S3) etlou réveiller chaque station de base des cellules du groupement de cellules, lorsque l'entité de réseau central indique la recherche d'un dispositif mobile situé dans une cellule du groupement de cellules.

15. Système de communication sans fil (300) comprenant au moins une entité de réseau central selon la revendication 13.
